# EUROPÄISCHE PATENTSCHRIFT

(11) **EP 0 288 884 B1**
(45) Veröffentlichungstag und Bekanntmachung des Hinweises auf die Patenterteilung: **21.06.1995**
(21) Anmeldenummer: 88106272.3
(22) Anmeldetag: 20.04.1988
(51) Int. Cl.: B23K 26/00, B23K 33/00

(54) **Anordnung zum VerschweiBen von stumpf gegeneinanderzulegenden Flanken von Metallblechen, Kunstofftafeln oder dergleichen**
Weld
Joint soudé

(30) Priorität: 22.04.1987 DE 3713527
(43) Veröffentlichungstag der Anmeldung: 02.11.1988
(73) Patentinhaber: Büdenbender, Bernd, D-21682 Stade (DE)
(72) Erfinder: Büdenbender, Bernd, D-21682 Stade (DE)
(74) Vertreter: Grosse, Dietrich, Dipl.-Ing.

(56) Entgegenhaltungen:
- DE-B- 1 187 458
- DE-B- 2 408 680

## Beschreibung

Die Erfindung betrifft eine Anordnung zum Verschweißen von stumpf gegeneinanderzulegenden Flanken von gegebenenfalls kunststoffbeschichteten Metallblechen, von Kunststofftafeln oder dergleichen, mittels eines Laserschweißgerätes.

Beim Schweißen relativ dünner Bleche, bspw. Blechen im Stärkenbereich von 0,6 bis 3,0 mm, oder aber auch entsprechend starken Kunststofftafeln, bieten sich Schwierigkeiten, wenn diese Bleche ohne wesentlichen zusätzlichen Materialauftrag stumpf miteinander verschweißt werden sollen. So können beim Schneiden der Bleche geringfügige Abweichungen auftreten sowie ein Grat sich bilden, so daß beim Zusammenschieben der Blechflanken diese zwar bereichsweise aneinanderstoßen, in anderen Bereichen aber schmale Stoßlücken einschließen, die ein Schweißen ohne zusätzliches Schweißgut vereiteln. Schwierigkeiten bereitet es auch, vermittels von Anordnungen zum Verschweißen Blech- oder Kunststofftafeln im Bereiche der Schweißnaht so exakt zu spannen, daß ihre Flanken höhengleich aufeinandertreffen. Schließlich bedarf es auch eines relativ hohen Aufwandes, mittels solcher Anordnungen scharf bündelnde schweißende Wärmequellen, wie bspw. Laserschweißstrahlen, so exakt zu führen, daß das Aufschmelzen exakt in der Stoßstelle erfolgt und die beiden zu verbindenden Tafeln in gleicher Weise erhitzt werden.

Es existiert bereits eine Vielzahl von Vorschlägen zum Aufbau solcher Anordnungen und zur Vorbereitung solcher Schweißnähte, um ein exaktes Schweißen zu ermöglichen. So sollen nach der DE-B 10 87 878 die Bleche im Schweißbereich hochgebogen und abgeschrägt aneinandergelegt werden, während die DE-B 11 68 218 zwar ebenfalls ein Aufbiegen empfiehlt, jedoch zusätzlich das Einbringen einer Hohlkehle in die winkelartig aufgebogenen Kantenbereiche. Nach der DE-C 737 373 wird ein winkelartiges Ausbiegen empfohlen, wobei einer der Schenkel den anderen mit seinem abgebogenen Ende übergreift, und nach der DE-C 733 200 soll beim elektrischen Widerstandsschweißen ein Falz eingebracht werden, der erst nach Durchführung der Verschweißung endgültig umgelegt wird. Trotz der hierbei erforderlichen gesonderten Vorbereitungsarbeiten wird vielleicht eine haltbare Verschweißung erreicht, nicht aber eine im wesentlichen plan durchgeführte Stumpfschweißung.

Aus der DE-A 2 408 680 sind Mittel zum Zentrieren von Kohldrehkörpern und eine Vorrichtung zum Herstellen der Zentriermittel bekannt. Um dünnwandige, als Drehkörper ausgeführte, zylindrische Hohlkörper miteinander zu verbinden wird hier empfohlen, die einander zugekehrten Kohldrehkörperenden stirnseitig derart zu profilieren, daß koaxiale, aneinanderpassende Kegelstumpfmantelflächen erscheinen. Sie erlauben es, die Hohlkörper stirnseitig in axialer Richtung gegeneinander zu verspannen, wobei die Kegelstumpfmantelflächen ein Zentrieren innerhalb der gemeinsamen Achse der Hohldrehkörper sichern. Auch hier wird eine vielleicht haltbare und dichte Verschweißung erreicht, nicht aber eine im wesentlichen plan durchgeführte Stumpfschweißung zweier ebener Blechtafeln oder eine lineare Schweißung entlang einer Mantellinie eines aus Blech geformten zylindrischen Hohlkörpers.

Die Erfindung geht von der Aufgabe aus, eine Anordnung zum Verschweißen von stumpf gegeneinander zu legenden Flanken von gegebenenfalls kunststoffbeschichteten Metalltafeln wie bspw. solche aus Stahlblech, Edelstahl oder dergleichen oder Kunststofftafeln zu schaffen, welche das zu verschweißende Material sicher und ohne wesentliche Biegungen aus der eigentlichen Tafelebene zu halten und das Laserschweißgerät sicher zu führen vermag, um eine glatte, dichte und verläßliche Schweißnaht zu erhalten. Erreicht wird dieses durch die in den Ansprüchen 1 oder 2 gekennzeichneten Maßnahmen, wobei in einem ersten Arbeitsgang die zusammenzufügenden Flanken vermittels von Werkzeugen derart bearbeitet werden, daß sie einander ergänzende Profile erhalten, die ineinanderzugreifen vermögen. In einem zweiten Arbeitsgang werden die zu verbindenden Flanken nut-feder-artig ineinandergreifend zusammengeschoben, so daß sie ineinandergreifend einen weiteren Beitrag zum Planliegen der Schweißbereiche erbringen, und in einem abschließenden Arbeitsgang wird die Schweißvorrichtung, das Laserschweißgerät, entlang des gebildeten Stoßbereiches geführt.

Durch das Einarbeiten sich ergänzender und nut-feder-artig ineinandergreifender Profile wird zunächst einmal erreicht, daß beim Aneinanderpressen der zu verschweißenden Flanken diese infolge ihrer Profile sich selbst höhengerecht einstellen und abstützen, so daß entlang der zu bildenden Schweißnaht die Höhe der die zu verbindenden Flanken aufweisenden Randstreifen übereinstimmt. Da infolge der ineinandergreifenden Profilierung die zu verbindenden Flanken nicht mehr durch eine vertikale Ebene voneinander getrennt sind, sondern Profilteile ineinandergreifen, ist auch die Führung der Schweißeinrichtung über die zu bildende Schweißnaht nicht mehr so kritisch. Sie wird zweckmäßig nicht entlang der sichtbaren Stoßstelle geführt, sondern von dieser aus etwas in Richtung der eingreifenden Profilstege verschoben. Damit aber gestattet die Führung der Schweißeinrichtung wesentlich höhere Toleranzen als beim stumpfen Aneinanderstoßen der Flanken, da nunmehr infolge geringfügiger seitlicher Auslenkungen nicht etwa der zu verschweißende Bereich verlassen wird, sondern vielmehr nur die miteinander zu verschweißenden Tafeln Elemente in unterschiedlichen Höhenbereichen aufweisen. Bei der Einarbeitung der Profile werden gleichzeitig beim Schneiden ungewollt aufgebrachte Biegungen reduziert, und beim Schneiden gebildeter Grat wird entfernt, so daß sich in jedem Falle eine saubere Verbindung ergibt.

Dementsprechend hat es sich auch bewährt, das Schweißgerät nicht entlang der sichtbaren Stoßkante zu führen, sondern geringfügig etwa bis zur Mittellinie der ineinandergreifenden Profilkonturen versetzt. Bewährt haben sich Profiltiefen von mindestens dem 0,1fachen der Tafelstärke; über das Einfache der Tafelstärke wird man nur selten hinausgehen, um die Bearbeitungskosten in Grenzen zu halten.

Zum Verschweißen der Bleche und/oder Kunststofftafeln hat sich eine Anordnung bewährt, welche aufeinander zu verschiebbare Spannvorrichtungen aufweist, zwischen denen mindestens eine entlang einer Führung zwischen den Flanken der Tafel vorschiebbare Bearbeitungsvorrichtung vorgesehen ist, die mit auf die einander zugekehrten Flanken der Tafel einwirkenden profilierenden Werkzeugen versehen ist, die als Schleifspindeln, als Fräser oder dergleichen ausgebildet sein können.

Zur Herstellung zylindrischer Mantelschüsse, bspw. der Körper von Fässern, zylindrischen Behältern oder dergleichen, haben sich entlang einer Kurvenbahn unter Drehen aufeinander zu verfahrbare Spannvorrichtungen bewährt, welche eine Blechtafel beidendig zu fassen vermögen, und denen entlang von Führungen entlang zweier einander gegenüberliegender Flanken der Blechtafel verschiebbare profilierende Werkzeuge zugeordnet sind. Hiermit ist es möglich, zunächst bspw. noch in gestreckter Stellung der Blechtafel die einander gegenüberliegenden Flanken zu profilieren und dann durch Verfahren und Drehen der Spannvorrichtung die Blechtafel zu krümmen und die in die einander gegenüberliegenden Flanken eingearbeiteten Profilierungen zum gegenseitigen Eingriff zu bringen, so daß der Mantel mit einer entlang einer Mantellinie geführten Naht verschweißbar ist. Darüber hinaus besteht allerdings auch die Möglichkeit, das zu verschweißende Blech zunächst zylindrisch vorzubiegen und dann die einander genäherten Flanken mittels einermgemeinsamen Bearbeitungsvorrichtung zu profilieren.

Das Profilieren in vorgegebener Höhe kann erleichtert werden, indem den zum Profilieren vorgesehenen Werkzeugen Rollen oder dergleichen zugeordnet sind, welche zu bearbeitende Flanken aufweisende Randbereiche von Blech- oder Kunststofftafeln zu führen vermögen. Andererseits ist es aber auch möglich, bspw. Spannvorrichtungen zwei zu bearbeitende Flanken in unterschiedlichen Höhen halten zu lassen, die unterschiedlichen Schaftabschnitten eines Werkzeuges zugeordnet sind, so daß mittels unterschiedlicher Schaftbereiche eines Werkzeuges die positiven und die zugehörigen negativen Profilierungen bewirkbar sind.

Im einzelnen sind die Merkmale der Erfindung den folgenden Beschreibungen von Ausführungsbeispielen in Verbindung mit diese darstellenden Zeichnungen zu entnehmen. Es zeigen hierbei:
- Figur 1: schematisch vermittels von Spannvorrichtungen gefaßte Randbereiche von Tafeln, deren Flanken vermittels von Werkzeugen profiliert werden und
- Figur 2: schematisch den nach Zusammenfügen der Flanken bewirkten Schweißvorgang,
- Figur 3: eine entsprechende Profilierung einander gegenüberliegender Flanken einer Blechtafel, und
- Figur 4: den Schweißvorgang nach ringförmigem Durchbiegen der Blechtafel zur Bildung des Mantels eines Gefäßes, sowie
- Figuren 5 bis 12: unterschiedliche Ausführungen ineinandergreifender Profilierungen der Flanken von Tafeln.

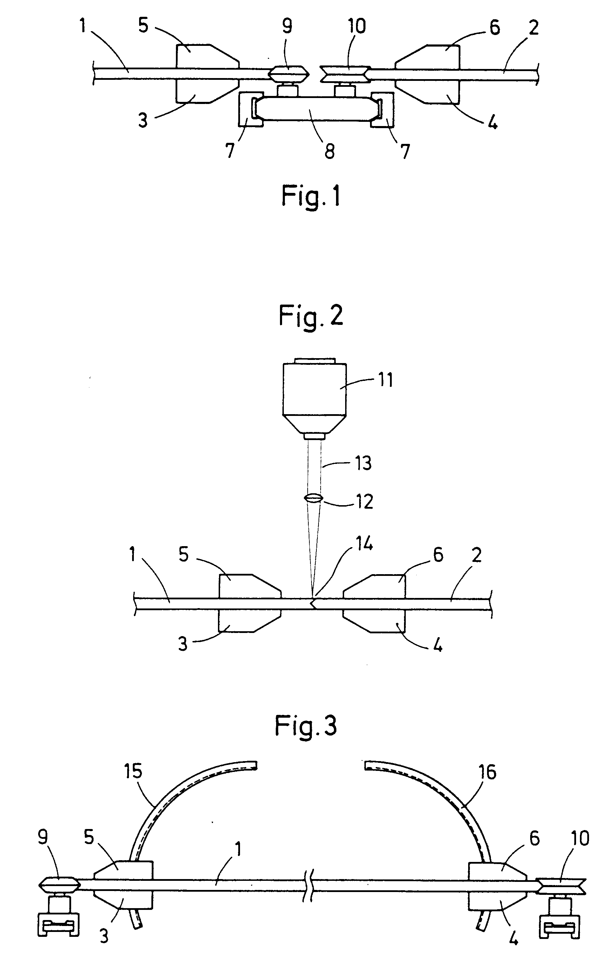

In der Fig. 1 sind zwei Tafeln 1, 2, bspw. Kunststofftafeln, gezeigt, die durch eine Stumpfschweißnaht miteinander verbunden werden sollen. Die Tafeln 1 und 2 sind auf Auflageleisten 3 und 4 aufgebracht und auf diesen vermittels von Spannleisten 5, 6 festgespannt. Entlang einer zwischen den Auflageleisten verlaufenden Führung 7 ist eine Schleifvorrichtung 8 verschiebbar, die mit zwei Schleifspindeln 9 und 10 ausgestattet ist. Die Schleifspindel 9 weist hierbei einen Schleifkörper auf, der zwei mit ihrer Basis aneinandergefügten Kegelstümpfen entspricht, so daß in die bearbeitete Flanke der Tafel 1 eine winkelförmige Nut während des Vorschiebens der Schleifvorrichtung 8 eingearbeitet wird. Die Schleifspindel 10 enthält einen Schleifkörper, der zwei mit ihren Deckflächen aufeinandergestellten Kegelstümpfen entspricht, so daß die zu bearbeitende Flanke der Tafel 2 winkelförmig angeschärft wird.

Nach Durchführen der Bearbeitung sind die einander zugewandten Flanken der Tafeln 1 und 2 derart profiliert, daß sie etwa nut-feder-artig zusammenfügbar sind.

In Fig. 2 ist dieser Zustand dargestellt; nach Durchfahren der Schleifvorrichtung 8 und Absenken der Führung 7 sind die jeweils aus Auflageleiste und Spannleiste gebildeten Spannvorrichtungen aufeinander zugefahren worden, bis die zugespitzte Flanke der Tafel 2 sich in die Ausnehmung der Flanke der Tafel 1 legte. Nunmehr kann der eigentliche Schweißvorgang erfolgen, bei dem das Laser-Schweißgerät 11 ein Laser-Bündel 13 liefert, das mittels eines Kollektors 12 zum Schweißpunkt 14 gesammelt wird. Zweckmäßig wird dieser nicht entlang der sichtbaren Stoßstelle geführt, sondern etwas zum Grunde der Nut der Tafel 1 hin versetzt, so daß in jedem Falle beide Tafeln vom Schweißstrahl und damit der Schweißhitze voll erfaßt werden.

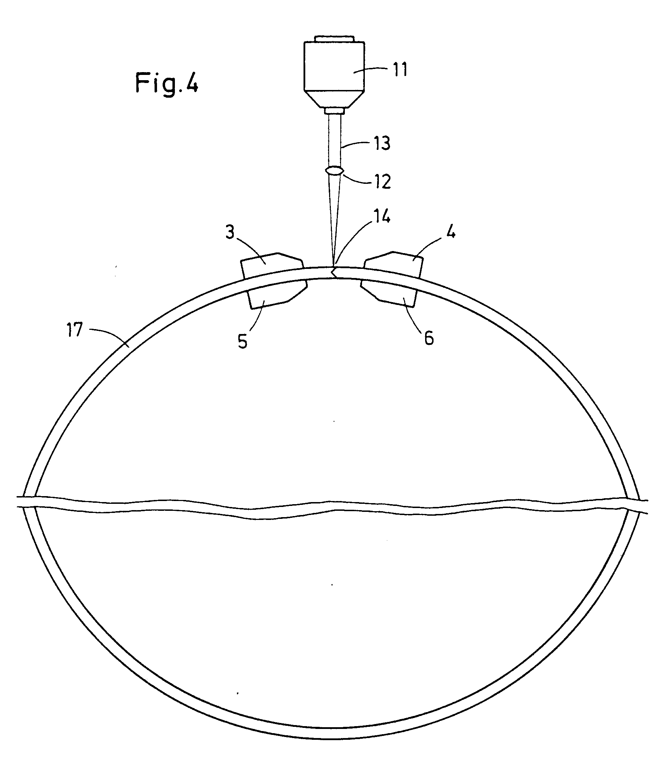

Anhand der Fig. 3 und 4 wird die Möglichkeit gezeigt, auf entsprechende Art bspw. den Mantel eines Gefäßes, Fasses oder dergleichen zu bilden. Zwar kann die eigentliche Durchbiegung wie üblich vermittels von Biegevorrichtungen erfolgen, es besteht gegebenenfalls aber auch die Möglichkeit, die auch hier vorgesehenen Spannvorrichtungen zur Fertigstellung auszunutzen.

Nach der Fig. 3 ist ein Blech 1 beidendig auf Auflageleisten 3, 4 aufgelegt und vermittels von Spannleisten 5 und 6 auf diesen fetgespannt. Entlang der beiden einander gegenüberliegenden Flanken der Tafel 1 wird jeweils eine Schleifspindel 9 bzw. 10 oder ein entsprechender Fräser geführt, welche die beiden Flanken mit sich ergänzenden Profilen versehen und gleichzeitig gegebenenfalls vorhandenen Grat entfernen sowie durch Begradigung der Flanken geringfügige Schnittfehler beheben. Nach Fertigstellung der Bearbeitung der Flanken der Tafel 1 werden die Spannvorrichtungen 3, 5 bzw. 4, 6 entlang von Kurven 15 und 16 aufeinander zu gefahren, und gleichzeitig werden die Spannvorrichtungen hierbei um ihre Längsachse gedreht, so daß die in Fig. 4 gezeigte Stellung erreicht wird, in der die Tafel zum zylindrischen Mantel 17 gebogen ist und die Profilierungen der zusammengeführten Flanken ineinandergreifen. Nunmehr kann die bereits aus Fig. 2 bekannte Laser-Schweißeinrichtung 11 wirksam werden und, den Schweißpunkt 14 über die durch die Flanken bezeichnete Mantellinie ziehend, diese verschweißen.

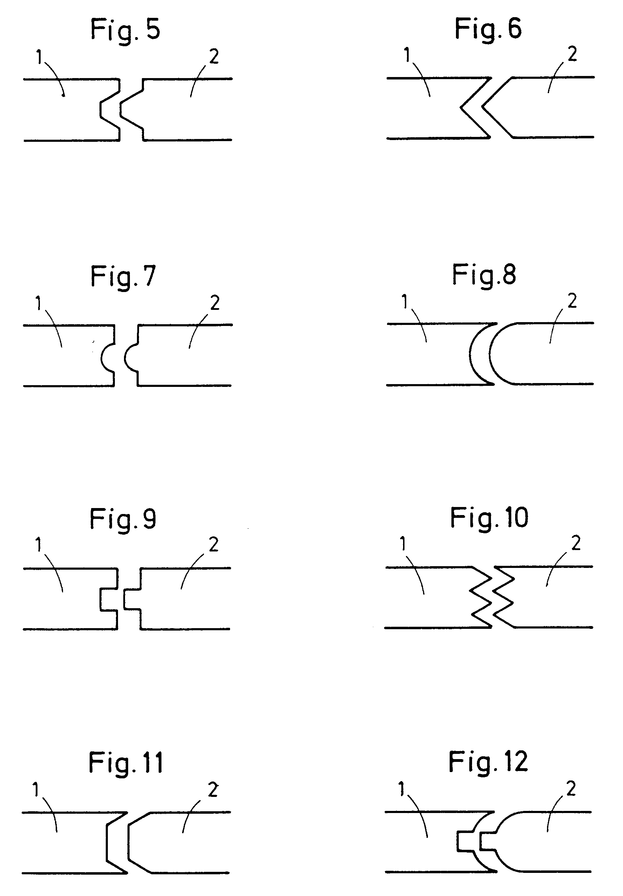

Das Verschweißen vorprofilierter und ineinandergeführter Flanken kann bei unterschiedlichen Materialien erfolgen, so bspw. Blechen, kunststoffbeschichteten Blechen, Blechen aus unterschiedlichen Metallen oder Metallegierungen, es können aber auch Kunststofftafeln auf diese Art verschweißt werden. Aus der Fülle der möglichen Profilierungen sind in den folgenden Figuren Beispiele dargestellt. So greift nach Fig. 5 eine trapezförmig ausgebildete Feder einer Tafel 2 in eine entsprechend trapezförmig gestaltete Nut der zweiten Tafel 1 ein. Bei der Fig. 6 ist, wie schon in Verbindung mit Fig. 1 erläutert, die eine Tafel 2 winkelförmig angeschärft, während die andere 1 eine entsprechend gestaltete Nut aufweist. Nach Fig. 7 ist in einer der Tafeln eine etwa halbkreisförmige Nut eingearbeitet, während die gegenüberstehende Tafel eine entsprechend gestaltete Feder aufweist. Nach Fig. 8 ist eine der Flanken praktisch halbkreisförmig profiliert, und die gegenüberstehende Flanke weist einen entsprechenden Ausschnitt auf. Nach Fig. 9 wird eine einfache, rechteckförmige bzw. quadratische Feder vorgesehen, die in eine entsprechende Nut der gegenüberstehenden Flanke einzugreifen vermag. Bei Fig. 10 sind beider Flanken mit winkelförmigen Spitzen und Ausnehmungen versehen, Fig. 11 zeigt eine Abwandlung der Fig. 6, bei der die Bearbeitungstiefe der Tafel 1 reduziert wurde, und nur die Randbereiche der Flanke der Tafel 2 angeschärft sind, und Figur 12 schließlich zeigt eine quadratische Feder auf einer abgerundeten Flanke. Die in den Fig. 5 bis 12 dargestellten Ausführungen von Profilierungen geben allerdings nur wenige einer Vielzahl möglicher Profilierungen an, und es ist auch nicht in jedem Falle unbedingt erforderlich, daß diese Profilierungen sich lückenlos ergänzen. So könnte bspw. der Keil der Fig. 6 geringfügig abgeflacht sein, während die in der Gegenflanke vorgesehene Nut praktisch winkelförmig wie dort dargestellt ausgeführt ist.

In jedem Falle hat es sich bewährt, daß zunächst einmal beim Zusammenfügen schon die Profilierung mit dazu beiträgt, daß aufeinander zu vorgeschobene Randbereiche tatsächlich sich gegenseitig zentrieren und damit in den gleichen Höhenbereich gelangen. In jedem Falle ist auch gesichert, daß bei geringfügigen seitlichen Auswanderungen des Schweißstrahles weder die Festigkeit noch die Dichtigkeit der Naht beeinträchtigt werden; werden die Profile nicht an der Wurzel voll erfaßt, so ist der Schweißstrahl bzw. der Schweißpunkt doch wenigstens auf eine Teilhöhe des Profiles ausgerichtet, so daß in jedem Falle eine vollwertige Verbindung erzielt wird.

## Patentansprüche

1. Anordnung zum Verschweißen von stumpf gegeneinander zu legenden Flanken von gegebenenfalls kunststoffbeschichteten Metallblechen, von Kunststofftafeln oder dergleichen, mittels eines Laserschweißgerätes (11),
**gekennzeichnet**
- durch gegeneinander verschiebbare Spannvorrichtungen (3, 5; 4, 6), welche in ihrer ersten auseinandergefahrenen Position die Endbereiche der zu verbindenden Tafeln (1, 2) fassen,
- durch in Führungen (7) entlang der miteinander zu verbindenden Flanken der gespannten Tafeln (1, 2) verschiebbare Bearbeitungsvorrichtungen (Schleifvorrichtungen 8) mit auf diese Flanken einwirkenden, sie nut-feder-artig profilierenden Werkzeugen,
- und durch eine das Laserschweißgerät (11) entlang der durch Zusammenfahren der Spannvorrichtungen (3, 5 4, 6) gebildeten Nut-Feder-Stoßstelle der zu verbindenden Flanken führenden Vorrichtung, wobei der vom Laserbündel (13) mittels eines Kollektors (12) gebildete Schweißpunkt (14) gegen die sichtbare Stoßstelle der Tafeln (1, 2) in Richtung des eingreifenden Profilsteges verschoben geführt ist.

2. Anordnung zum Verschweißen von stumpf gegeneinander zu legenden Flanken von gegebenenfalls kunststoffbeschichteten Metallblechen, von Kunststofftafeln oder dergleichen, mittels eines Laserschweißgerätes (11),
**gekennzeichnet**
- durch entlang von Kurvenbahnen (15, 16) unter Drehen aufeinanderzu verfahrbare Spannvorrichtungen (3, 5; 4, 6), welche in ihrer ersten, auseinandergefahrenen Position die beiden Endbereiche einer zum Hohlzylinder zu fügenden Tafel (1) fassen,
- durch in Führungen (7) entlang der miteinander zu verbindenden Flanken verschiebbare Bearbeitungsvorrichtungen (Schleifvorrichtung 8) mit auf die Flanken der Tafel einwirkenden, diese nut-feder-artig profilierenden Werkzeugen,
- und durch eine das Laserschweißgerät (11) entlang der durch Zusammenfahren der Spannvorrichtungen (3, 5; 4, 6) gebildeten Nut-Feder-Stoßstelle der zu verbindenden Flanken führende Vorrichtung, wobei der aus dem Laserbündel (13) mittels eines Kollektors (12) gebildete Schweißpunkt gegen die sichtbare Stoßstelle in Richtung des eingreifenden Profilsteges verschoben geführt ist.

3. Anordnung nach einem der Ansprüche 1 oder 2,
**dadurch gekennzeichnet,**
daß den Bearbeitungsvorrichtungen (8) Führungsmittel, Rollen oder dergleichen zugeordnet sind, welche die zu bearbeitenden Flanken aufweisenden Randbereiche der Tafeln (1, 2) bzw. der Tafel (1) über- und/oder untergreifen.

4. Anordnung nach Anspruch 1 oder 2,
**dadurch gekennzeichnet,**
daß Spannvorrichtungen (3, 5; 4, 6) zu bearbeitende Flanken von Tafeln (1, 2) bzw. einer Tafel (1) in unterschiedlichen Höhen halten, die unterschiedlichen Schaftabschnitten von Werkzeugen (9, 10) einer Bearbeitungsvorrichtung (8) zugeordnet sind.

## Claims

1. An arrangement for welding edges, to be laid abutting one another, of plastic-coated metal sheets, plastic plates or similar, as appropriate, by means of a laser welding apparatus (11),
**characterised by**
- work chucking fixtures (3, 5; 4, 6), which can be moved towards one another, and which grasp the end regions of the plates to be joined in their first separated position,
- machining devices (grinding device 8), displaceable in guides (7) along the edges of the clamped plates (1, 2) to be joined to one another, having tools acting on these edges and giving them a tongue-and-groove profile,
- and a device guiding the laser welding apparatus (11) along the tongue-and-groove joint of the edges to be joined, which is formed by bringing together the work chucking fixtures (3, 5, 4, 6), with the weld point (14) formed by the laser beam (13) by means of a condenser (12) being guided towards the visible joint of the plates (1, 2), displaced in the direction of the engaging profiled web.

2. An arrangement for welding edges, to be laid abutting one another, of plastics-coated metal sheets, of plastics plates or the like, as appropriate, by means of a laser welding apparatus (11),
**characterised by**
- work chucking fixtures (3, 5; 4, 6) movable towards one another, whilst being rotated, along curved paths (15, 16), which in their first separated position grasp the two end regions of a plate (1) to be joined to the hollow cylinder,
- machining devices (grinding device 8) displaceable in guides (7) along the edges to be joined to one another having tools acting on the edges of the plates and giving them a tongue-and-groove profile,
- and a device guiding the laser welding apparatus (11) along the tongue-and-groove joint of the edges to be joined formed by moving together the work chucking fixtures (3, 5; 4, 6), wherein the weld point formed from the laser beam (13) by means of a condenser (12) is guided towards the visible joint, displaced in the direction of the engaging profiled web.

3. An arrangement according to one of Claims 1 or 2,
**characterised in that** guide means, rollers or the like, which engage over and/or under the edge regions of the plates (1, 2) or respectively of the plate (1) exhibiting the edges to be machined, are associated with the machining devices (8).

4. An arrangement according to Claim 1 or 2,
**characterised in that** work chucking fixtures (3, 5; 4, 6) hold edges of plates (1, 2) or respectively of a plate (1) to be machined at different heights, which are associated with different shaft sections of tools (9, 10) of a machining device (8).

## Revendications

1. Dispositif pour souder bord à bord des tôles métalliques, le cas échéant recouvertes d'un matériau synthétique, des feuilles en matériau synthétique ou analogues, à l'aide d'un appareil de soudure au Laser,
caractérisé
- par des dispositifs de serrage (3, 5; 4, 6) pouvant être déplacés l'un par rapport à l'autre qui maintiennent, dans leur première position écartée, les parties extrêmes des feuilles (1, 2) à assembler,
- par des dispositifs d'usinage (dispositif à rainurer 8) pouvant être déplacés dans des guides (7) le long des bords à assembler l'un avec l'autre des feuilles (1, 2) enserrées, lesdits dispositifs d'usinage comportant des outils qui usinent les bords en les profilant pour former un assemblage de type rainure-languette et
- par un dispositif guidant l'appareil de soudure à Laser (11) le long du joint de l'assemblage rainure-languette formé par les bords à assembler lors de l'assemblage des dispositifs de serrage (3, 5; 4, 6), le point de soudure (14) formé à l'aide d'un collecteur (12) par le faisceau Laser (13) étant guidé par le joint visible entre les feuilles (1, 2) en le déplaçant vers la rainure du profil d'assemblage.

2. Dispositif pour souder bord à bord des tôles métalliques, le cas échéant recouvertes de matériau synthétique, des feuilles en matériau synthétique ou analogue, à l'aide d'un appareil de soudure au Laser (11), caractérisé
- par des dispositifs de serrage (3, 5; 4, 6) pouvant être déplacés l'un vers l'autre le long de trajectoires incurvées (15, 16) en les tournant, lesdits dispositifs maintenant, dans leur première position écartée, les deux zones extrêmes d'une feuille (1) assemblées de manière à former un cylindre creux,
- par des dispositifs d'usinage (dispositif à rainurer 8) pouvant être déplacés dans des guides (7) le long des bords à assembler l'un avec l'autre comportant des outils usinant les bords de la feuille en les profilant pour former un assemblage de type rainure-languette et
- par un dispositif guidant l'appareil de soudure au Laser (11) le long du joint de l'assemblage rainure-languette formé par les bords à assembler lors de l'assemblage des dispositifs de serrage (3, 5; 4, 6), le point de soudure (14) formé à l'aide d'un collecteur (12) par le faisceau Laser (13) étant guidé par le joint visible entre les feuilles (1, 2) en le déplaçant vers la rainure du profil d'assemblage.

3. Dispositif selon l'une quelconques des revendications 1 ou 2, caractérisé en ce que les dispositifs d'usinage (8) comportent des moyens de guidage, des rouleaux ou analogues qui s'agrippent au-dessus et/ou au-dessous des zones latérales comportant les bords à usiner des feuilles (1, 2) ou de la feuille (1).

4. Dispositif selon la revendication 1 ou 2, caractérisé en ce que des dispositifs de serrage (3, 5; 4, 6) maintiennent les bords à usiner des feuilles (1, 2) ou de la feuille (1) à des niveaux différents qui correspondent à des sections de lames différentes des outils (8, 9) d'un dispositif d'usinage (8).
